# EUROPÄISCHE PATENTSCHRIFT

(11) **EP 2 572 323 B1**
(45) Veröffentlichungstag und Bekanntmachung des Hinweises auf die Patenterteilung: **18.05.2016**
(21) Anmeldenummer: 11743460.5
(22) Anmeldetag: 08.07.2011
(51) Int. Cl.: H04L 29/12, H04L 29/06, H04L 12/24, G06Q 10/00, G06F 15/177, G06Q 10/08, H04L 9/08, H04L 9/32

(54) **VERFAHREN UND VORRICHTUNG ZUM EINBINDEN EINES GERÄTES IN EIN NETZWERK**
METHOD AND DEVICE FOR INTEGRATING A DEVICE INTO A NETWORK
PROCÉDÉ ET DISPOSITIF D'INTÉGRATION D'UN APPAREIL DANS UN RÉSEAU

(30) Priorität: 03.08.2010 DE 102010033230
(43) Veröffentlichungstag der Anmeldung: 27.03.2013
(73) Patentinhaber: Siemens Aktiengesellschaft, 80333 München (DE)
(72) Erfinder: FALK, Rainer, 85586 Poing (DE); KLASEN, Wolfgang, 85521 Ottobrunn (DE); STEPHAN, Guido, 85658 Egmating (DE)
(86) Internationale Anmeldenummer: PCT/EP2011/061646
(87) Internationale Veröffentlichungsnummer: WO 2012/016793

(56) Entgegenhaltungen:
- EP-A2- 1 887 758
- US-A1- 2005 256 939
- US-A1- 2008 095 369
- US-A1- 2008 175 224

## Beschreibung

Die Erfindung betrifft ein Verfahren und eine Vorrichtung zum Einbinden eines Gerätes in ein Netzwerk, insbesondere ein geschütztes Einbinden eines Steuergerätes in ein Automatisierungsnetzwerk.

Damit ein kommunikationsfähiges Gerät, beispielsweise ein Feldgerät, wie etwa ein Steuergerät, ein intelligenter Sensor oder Aktor, in ein Kommunikationsnetzwerk eingebunden werden kann, sind Konfigurationseinstellungen an dem Gerät vorzunehmen.

Die US 2005/256939 A1 zeigt ein Verfahren zum automatischen Konfigurieren eines Geräts in einem Netzwerk. Dazu wird die zuerst eine Netzwerkadresse des einzubindenden Geräts und eine Netzwerkadresse des Konfigurationsservers identifiziert. Daraufhin wird der in dem Konfigurationsserver gespeicherte Konfigurationsdatensatz in das Gerät geladen.

Die US 2008/175224 A1 beschreibt ein Verfahren bei dem Voice over IP (VoIP)-Geräte durch eine Interaktion mit einem Konfigurationsserver konfiguriert werden. Dabei wird beispielsweise eine Konfigurationsinformation unter der MAC-Adresse des VoIP-Gerät in einem Konfigurationsserver gespeichert und in das VoIP-Gerät geladen.

Das konfigurierende Gerät kann dabei mit einem übergeordneten Server, beispielsweise einem Automatisierungsserver eines Prozessleitsystems oder einer speicherprogrammierten Steuerung oder einer Leitwarte, kommunizieren, um Konfigurationseinstellungen zu erhalten. Dabei ist es notwendig, den Austausch von Daten über die Kommunikationsverbindung zwischen dem Gerät und dem Server kryptographisch zu schützen, beispielsweise indem man die

Daten verschlüsselt oder eine kryptographische Prüfsumme berechnet.

Damit die zwischen dem Gerät und dem Server ausgetauschten Daten kryptographisch verschlüsselt werden können, benötigt das Gerät einen kryptographischen Schlüssel bzw. ein Passwort, die bei dem Gerät konfiguriert werden müssen. Die Konfiguration von kryptographischen Schlüsseln bzw. Passwörtern bei Geräten ist normalerweise mit einem hohen Administrationsaufwand verbunden. Zudem ist die Eingabe bzw. die Konfiguration des kryptographischen Schlüssel bzw. des Passwortes bei dem Gerät fehleranfällig. Daher wird für das Installieren und die Inbetriebnahme eines kommunikationsfähigen Gerätes herkömmlicherweise ein hoher Zeitaufwand benötigt. Da zudem die Sicherheit des gesamten Netzwerkes von der Konfiguration abhängt, muss das Konfigurieren zudem geschützt erfolgen.

Es ist daher eine Aufgabe der vorliegenden Erfindung, ein Verfahren und eine Vorrichtung zum Einbinden in ein Netzwerk zu schaffen, die ein effizientes und geschütztes Einrichten einer Konfigurationseinstellung bei einem kommunikationsfähigen Gerät erlauben.

Diese Aufgabe wird erfindungsgemäß durch ein Verfahren mit den im Patentanspruch 1 angegebenen Merkmalen gelöst.

Die Erfindung schafft ein Verfahren zum Einbinden eines Gerätes in ein Netzwerk mit den Schritten:
Erfassen einer ersten Geräteidentifizierung des Gerätes durch ein Lesegerät, welches dazu autorisiert ist, die erfasste erste Geräteidentifizierung als Konfigurationsdaten in einen zugriffsgeschützten Konfigurationsdatenspeicher des Netzwerkes zu übermitteln, wobei die erste Geräteidentifizierung des Gerätes von dem Lesegerät zu dem Konfigurationsdatenspeicher des Netzwerkes übermittelt und darin gespeichert wird, Anschließen des einzubindenden Gerätes an einen Zugangsknoten des Netzwerkes,
wobei sich das Gerät gegenüber einem Server des Netzwerkes mittels einer zweiten Geräteidentifizierung identifiziert, und
automatisches Konfigurieren des angeschlossenen Gerätes für das Netzwerk durch den Server, sofern zu der zweiten Geräteidentifizierung des an dem Zugangsknoten des Netzwerkes angeschlossenen Gerätes bereits eine zugehörige erste Geräteidentifizierung des Gerätes in dem zugriffsgeschützten Konfigurationsdatenspeicher des Netzwerks gespeichert ist, wobei das automatische Konfigurieren des angeschlossenen Gerätes durch den Server kryptographisch geschützt ausgeführt wird, und wobei die zweite Geräte-Identifizierung ein digitales Zertifikat ist, das die erste Geräte-Identifizierung enthält.

Bei einer möglichen Ausführungsform des erfindungsgemäßen Verfahrens weist die erste Geräteidentifizierung einen an dem Gerät angebrachten optischen erkennbaren Barcode auf.

Bei einer weiteren möglichen Ausführungsform des erfindungsgemäßen Verfahrens weist die erste Geräteidentifizierung ein optisch erfassbares Typenschild oder Etikett des Gerätes auf.

Bei einer möglichen Ausführungsform des erfindungsgemäßen Verfahrens weist die erste Geräteidentifizierung eine auslesbare RFID-Kennung des Gerätes aus.

Bei einer möglichen Ausführungsform des erfindungsgemäßen Verfahrens wird das Gerät über eine drahtlose Kommunikationsschnittstelle an den Zugangsknoten des Netzwerkes angeschlossen.

Bei einer alternativen Ausführungsform des erfindungsgemäßen Verfahrens wird das Gerät über eine drahtgebundene Kommunikationsschnittstelle an den Zugangsknoten des Netzwerkes angeschlossen.

Bei einer möglichen Ausführungsform des erfindungsgemäßen Verfahrens ist die zweite Geräteidentifizierung eine Herstelleridentifizierung.

Weiterhin ist es möglich, dass die zweite Geräteidentifizierung eine Seriennummer oder eine MAC-Adresse des Gerätes aufweist.

Bei einer möglichen Ausführungsform des erfindungsgemäßen Verfahrens authentisiert das einzubindende Gerät seine zweite Geräteidentifizierung gegenüber dem Server des Netzwerkes mittels eines kryptographischen Schlüssels und/oder eines digitalen Zertifikates.

Bei einer möglichen Ausführungsform des erfindungsgemäßen Verfahrens wird die erfasste erste Geräteidentifizierung mit einem Zeitstempel versehen und nach Ablauf einer einstellbaren Zeitdauer automatisch aus dem Konfigurationsdatenspeicher des Netzwerkes gelöscht.

Bei einer möglichen Ausführungsform des erfindungsgemäßen Verfahrens wird die zweite Geräteidentifizierung des an dem Netzwerk angeschlossenen Gerätes durch den Server des Netzwerkes dahingehend überprüft, ob sich eine zu der zweiten Geräteidentifizierung zugehörige erste Geräteidentifizierung bereits in dem zugriffsgeschützten Konfigurationsdatenspeicher des Netzwerkes befindet.

Bei einer möglichen Ausführungsform des erfindungsgemäßen Verfahrens sind die erste Geräteidentifizierung und die zweite Geräteidentifizierung identisch.

Bei einer weiteren möglichen Ausführungsform des erfindungsgemäßen Verfahrens sind die erste Geräteidentifizierung und ein Hash-Wert der zweiten Geräteidentifizierung identisch.

Bei einer alternativen Ausführungsform des erfindungsgemäßen Verfahrens sind ein Hash-Wert der ersten Geräteidentifizierung und die zweite Geräteidentifizierung identisch.

Bei einer weiteren möglichen Ausführungsform des erfindungsgemäßen Verfahrens sind die erste Geräteidentifizierung und der Hash-Wert des zur Authentisierung der zweiten Geräteidentifizierung gegenüber dem Server des Netzwerkes verwendeten kryptographischen Schlüssels bzw. des verwendeten digitalen Zertifikates identisch.

Bei einer möglichen Ausführungsform des erfindungsgemäßen Verfahrens identifiziert und authentisiert sich das an dem Zugangsknoten des Netzwerkes angeschlossene Gerät gegenüber dem Server des Netzwerkes.

Bei einer weiteren möglichen Ausführungsform des erfindungsgemäßen Verfahrens wird das automatische Konfigurieren des angeschlossenen Gerätes durch den Server kryptographisch geschützt ausgeführt.

Bei einer weiteren möglichen Ausführungsform des erfindungsgemäßen Verfahrens weist die erste Geräteidentifizierung eine kryptographische Prüfsumme auf, welche durch das Lesegerät verifiziert wird, bevor die erste Geräteidentifizierung in dem Konfigurationsdatenspeicher des Netzwerkes durch das Lesegerät gespeichert wird.

Die Erfindung schafft ferner einen Server zum Einbinden eines Gerätes in ein Netzwerk,
wobei der Server Zugriff auf einen Konfigurationsdatenspeicher des Netzwerkes hat, in welchem erste Geräteidentifizierungen von zugelassenen Geräten durch ein dazu autorisiertes Lesegerät speicherbar sind
wobei der Server nach Anschluss eines Gerätes an einen Zugangsknoten des Netzwerkes dieses Gerät automatisch konfiguriert, falls zu einer von dem Gerät über das Netzwerk an den Server übertragenen zweiten Geräteidentifikation des Gerätes eine zugehörige erste Geräteidentifikation des Gerätes bereits in dem Konfigurationsdatenspeicher des Netzwerkes gespeichert ist, wobei das automatische Konfigurieren des angeschlossenen Gerätes durch den Server kryptographisch geschützt ausgeführt wird, und wobei die zweite Geräte-Identifizierung ein digitales Zertifikat ist, das die erste Geräte-Identifizierung enthält.

Bei einer möglichen Ausführungsform des erfindungsgemäßen Servers konfiguriert der Server das an dem Zugangsknoten des Netzwerkes angeschlossenen Gerät indem der Server Konfigurationseinstellungen, die kryptographische Schlüssel, Zertifikate und/oder Passwörter aufweisen, mittels DHCP, UPNP, TFTP, http oder SNMP über das Netzwerk und dessen Zugangsknoten an das angeschlossene Gerät überträgt.

Bei einer möglichen Ausführungsform des erfindungsgemäßen Servers ist der Konfigurationsdatenspeicher, auf den der Server Zugriff hat, auf einem Fileserver des Netzwerkes oder in einem Verzeichnisdienst des Netzwerkes oder in einer Datenbank vorgesehen.

Bei einer möglichen Ausführungsform des erfindungsgemäßen Servers dient der Server zum Einbinden eines Gerätes in ein Automatisierungsnetzwerk.

Bei einer möglichen Ausführungsform ist dieses Netzwerk ein drahtgebundenes oder ein drahtloses Netzwerk.

Weiterhin werden mögliche Ausführungsformen des erfindungsgemäßen Verfahrens und der erfindungsgemäßen Vorrichtung zum Einbinden eines Gerätes in ein Netzwerk unter Bezugnahme auf die beigefügten Figuren beschrieben.

Es zeigen:
- Figur 1: ein Diagramm zur Verdeutlichung einer möglichen Ausführungsform des erfindungsgemäßen Verfahrens zum Einbinden eines Gerätes in ein Netzwerk;
- Figur 2: ein Ablaufdiagramm zur Darstellung einer möglichen Ausführungsform des erfindungsgemäßen Verfahrens zum Einbinden eines Gerätes in ein Netzwerk.

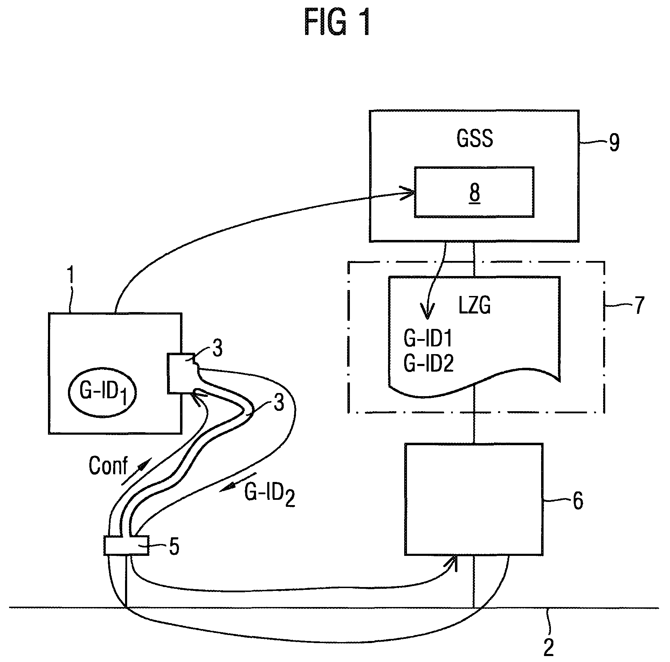

Wie man aus Figur 1 erkennen kann, kann bei dem dargestellten Beispiel ein Gerät 1 in Netzwerk 2 eingebunden werden. Bei dem in Figur 1 dargestellten Ausführungsbeispiel handelt sich bei dem Netzwerk 2 um ein drahtgebundenes Automatisierungsnetzwerk mit verschiedenen Einheiten, die über einen Datenbus miteinander verbunden sind.

Das anzubindende Gerät 1 verfügt über eine Kommunikationsschnittstelle 3, die in dem dargestellten Beispiel über ein Kabel 4 an einen Zugangsknoten 5 des Automatisierungsnetzwerkes 2 anschließbar ist.

Das Automatisierungsnetzwerk 2 weist ferner einen Server 6 auf, der unter Anderem zum Einbinden eines Gerätes in das Netzwerk 2 vorgesehen ist. Dabei hat der Server 6 Zugriff auf einen Konfigurationsdatenspeicher 7 des Netzwerkes, in dem ein Lesegerät 8 Daten einschreibt oder wobei Daten aus dem Lesegerät 8 durch den Konfigurationsdatenspeicher 7 ausgelesen werden. Bei dem in Figur 1 dargestellten Ausführungsbeispiel befindet sich das Lesegerät 8 an einer sogenannten Gerätesicherheitsschleuse 9. Die Gerätesicherheitsschleuse 9 ist vorzugsweise zugangsgeschützt, so dass nur berechtigte Personen hierzu Zugang haben.

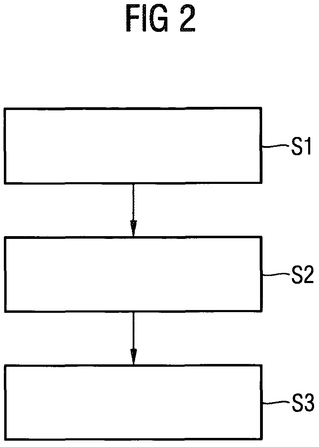

Das Einbinden des Gerätes 1 in das Automatisierungsnetzwerk 2 kann in mehreren Schritten durchgeführt werden. Es wird, wie in dem Ablaufdiagram gemäß Figur 2 gezeigt, in einem Schritt S1 eine erste Geräteidentifizierung G-ID1 des Gerätes 1 durch das Lesegerät 8 erfasst. Bei der ersten Geräteidentifizierung G-ID1 kann es sich um einen an dem Gerät 1 angebrachten optisch erkennbaren Barcode handeln. Bei einer weiteren möglichen Ausführungsform ist die erste Geräteidentifizierung ein optisch erfassbares Typenschild oder ein Etikett des Gerätes 1. Weiterhin kann es sich bei der ersten Geräteidentifizierung G-ID1 auch um eine auslesbare RFID-Kennung des Gerätes 1 handeln. Die erste Geräteidentifizierung kann auch eine Kombination verschiedener erster Geräteidentifizierungen sein und wird durch das Lesegerät 8 in Schritt S1 erfasst, wobei das Lesegerät 8 dazu autorisiert ist, die erfasste erste Geräteidentifizierung G-ID1 als Konfigurationsdaten in dem zugriffsgeschützten Konfigurationsdatenspeicher 7 des Netzwerkes zu übermitteln. Bei einer möglichen Ausführungsform weist das Lesegerät 8 einen optischen Sensor bzw. eine Kamera zum Erfassen eines optisch erkennbaren Barcodes eines optisch erfassbaren Typenschildes bzw. Etikett des Gerätes 1 auf. Alternativ kann das Lesegerät 8 einen RFID-Transceiver zum Auslesen einer RFID-Kennung des Gerätes 1 besitzen. Bei dem Lesegerät 8 kann es sich um ein fest installiertes Gerät aber auch um ein tragbares Gerät handeln. Bei der in Figur 1 dargestellten Ausführungsform befindet sich das Lesegerät 8 in einer zugangsgeschützten Gerätesicherheitsschleuse 9. Alternativ kann das Lesegerät 8 auch durch einen dazu befugten Nutzer zu dem einzubindenden Gerät 1 getragen werden, um dort eine erste Geräteidentifizierung G-ID1 des Gerätes 1 zu erfassen.

In einem weiteren Schritt S2 wird das einzubindende Gerät 1 an den Zugangsknoten 5 des Automatisierungsnetzwerkes 2 angeschlossen. Dabei kann das Gerät 1 über eine drahtlose oder, wie in Figur 1 dargestellt, über eine drahtgebundene Kommunikationsschnittstelle an den Zugangsknoten 5 des Netzwerkes 2 angeschlossen werden.

Das angeschlossene Gerät 1 identifiziert sich gegenüber dem Server 6 des Netzwerkes 2 mittels einer zweiten Geräteidentifizierung G-ID2. Bei einer möglichen Ausführungsform ist diese zweite Geräteidentifizierung G-ID2 eine Herstelleridentifizierung, eine Seriennummer oder eine MAC-Adresse des Gerätes 1. Weiterhin kann die zweite Geräteidentifizierung aus einer Kombination einer Herstelleridentifizierung einer Seriennummer oder einer MAC-Adresse des Gerätes 1 bestehen. Das einzubindende Gerät 1 authentisiert bei einer möglichen Ausführungsform seine zweite Gerätidentifizierung G-ID2 gegenüber dem Server 6 des Netzwerkes 5 mittels eines kryptographischen Schlüssels und/oder eines digitalen Zertifikats.

Bei einem weiteren Schritt S3 erfolgt ein automatisches Konfigurieren des angeschlossenen Gerätes 1 für das Netzwerk 2 durch den Server 6, sofern zu der zweiten Geräteidentifizierung G-ID2 des an dem Zugangsknoten 5 angeschlossenen Gerätes 1 sich bereits eine zugehörige erste Gerätidentifizierung G-ID1 des Gerätes 1 in dem zugriffsgeschützten Konfigurationsdatenspeicher 7 des Netzwerkes 1 befindet. Die zweite Geräteidentifizierung G-ID2 des in das Netzwerk 2 einzubindenden Gerätes 1 wird somit durch den Server 6 des Netzwerkes 2 dahingehend überprüft, ob sich eine zu der zweiten Gerätidentifizierung G-ID2 zugehörige passende erste Geräteidentifizierung G-ID1 bereits in dem zugriffsgeschützten Konfigurationsdatenspeicher 7 des Netzwerkes 2 befindet. Bei einer möglichen Ausführungsform ist die erste Geräteidentifizierung G-ID1 und die zweite Geräteidentifizierung G-ID2 des Gerätes 1 identisch. Alternativ können die erste Geräteidentifizierung G-ID1 und die zweite Geräteidentifizierung G-ID2 unterschiedlich sein und zueinander gehören, insbesondere wenn eine vorgegebene Zugehörigkeitsfunktion zwischen der ersten und zweiten Geräteidentifizierung besteht. Bei einer möglichen Ausführungsform ist die zweite Geräteidentifizierung G-ID2 ein digitales Zertifikat, das die erste Geräteidentifizierung G-ID1 enthält. Die erste Geräteidentifizierung G-ID1 kann dabei insbesondere in einem Attributfeld des digitalen Zertifikats enthalten sein. Weiterhin ist es möglich, dass die erste Geräteidentifizierung G-ID1 und ein Hash-Wert H(G-ID2) der zweiten Geräteidentifizierung G-ID2 identisch sind. Alternativ kann auch der Hash-Wert H(G-ID2) der ersten Geräteidentifizierung G-ID1 mit der zweiten Geräteidentifizierung G-ID2 identisch sein. Als Hash-Funktion H kann dabei z.B. eine CRC-Funktion, eine MD5-Funktion, eine SHA-1 oder SHA-256-Funktion verwendet werden.

Eine weitere Möglichkeit besteht darin, dass die erste Geräteidentifizierung G-ID1 und ein Hash-Wert des zur Authentisierung der zweiten Geräteidentifizierung G-ID2 gegenüber dem Server C des Netzwerkes 2 verwendeten kryptographischen Schlüssels K bzw. des dazu verwendeten digitalen Zertifikates Z identisch sind. Bei einer möglichen Ausführungsform befindet sich in dem zugriffsgeschützten Konfigurationsdatenspeicher 7 eine Liste zugelassener Geräte für das Automatisierungsnetzwerk 2. Der Automatisierungsserver 6 prüft dann, ob in der Liste zugelassene Geräte ein der Geräteidentifizierung G-ID2 zuordbarer Eintrag in der Liste vorhanden ist. Falls ja, wird das an dem Zugangsknoten 5 angeschlossene kommunikationsfähige Gerät 1 für das Automatisierungsnetzwerk 2 zugelassen. Es kann dann eine sogenannte Plug-and-Play Konfiguration des angeschlossenen Gerätes 1 erfolgen. Eine Plug-and-Play-Konfiguration kann Konfigurationseinstellungen betreffen, die auf dem Gerät 1 selbst abgelegt sind oder Konfigurationseinstellungen, die dem Gerät 1 zugeordnet werden können und beispielsweise auf einem Speicher des Automatisierungsservers 6 abgelegt sind. Das Konfigurieren des zugelassenen Gerätes 1 kann insbesondere das Erzeugen und Speichern von kryptographischen Credentials, wie beispielsweise kryptographischen Schlüsseln oder digitalen Zertifikaten, und/oder das Konfigurieren von Netzwerk-Adressen, wie beispielsweise einer IP-Adresse oder eines DNS-Namens des Gerätes 1 und/oder von Servern, umfassen.

Bei einer weiteren möglichen Ausführungsform des erfindungsgemäßen Verfahrens wird die erste Geräteidentifizierung G-ID1 bei der Erfassung mit einem Zeitstempel versehen und wird nach Ablauf einer einstellbaren Zeitdauer automatisch aus dem Konfigurationsdatenspeicher 7 gelöscht. Bei dieser Ausführungsform wird für die Liste zugelassener Geräte eine Timeout-Funktion realisiert, das heißt der Eintrag einer Geräte-ID in die Liste wird beispielsweise nach einer Stunde oder 24 Stunden automatisch gelöscht, wenn in diesem Zeitraum kein Gerät 1 einer entsprechenden Geräte-ID mit dem Automatisierungsnetzwerk 2 verbunden wird.

Das an dem Zugangsknoten 5 des Netzwerkes 2 angeschlossene Gerät 1 mit der Geräteidentifizierung G-ID2 identifiziert sich und authentifiziert sich gegenüber dem Server 6 des Netzwerkes 2. Dabei können verschiedene Netzwerkauthentisierungsverfahren eingesetzt werden, beispielsweise unter Verwendung eines digitalen Zertifikat nach X.509 und/oder unter Verwendung eines kryptographischen Schlüssels, zum Beispiel ein Netzwerkauthentisierungsverfahren gemäß MACsec, IPsec/IKE, SSL/TLS, 802.1x oder einer EAP-basierten Authentisierung, wobei das Gerät 1 authentisiert wird. Wenn eine kryptographische Prüfsumme zusätzlich zu der Geräte-ID in der Liste zugelassenes Gerät enthalten ist, so kann der Automatisierungsserver 6 in einer möglichen Ausführungsform anhand dieser Prüfsumme eine zweite über eine Kommunikationsschnittstelle 3 des Gerätes 1 empfangene Prüfsumme überprüfen, beispielsweise auf Identität. Nach erfolgreicher Prüfung wird anschließend eine Plug-and-Play-Konfiguration des einzubindenden Gerätes 1 anschließend durchgeführt. In einer weiteren Variante werden die in der Liste zugelassener Geräte 7 des Automatisierungsnetzwerkes 2 enthaltene kryptographische Prüfsummen dazu verwendet, das Durchführen der Plug-and-Play-Konfiguration des einzubindenden Gerätes 1 kryptographisch zu schützen, insbesondere dazu, die Plug-and-Play-Kommunikation kryptographisch zu schützen. Die kryptographische Prüfsumme kann dabei als kryptographischer Schlüssel verwendet werden. Ferner ist es möglich, dass von der kryptographischen Prüfsumme ein kryptographischer Schlüssel K abgeleitet wird, z.B. durch eine Schlüsselableitungsfunktion KDF. Beispiele für eine solche Schlüsselableitungsfunktion sind MD5, SHA-1, HMAC-MD5 oder HMAC-SHA1. Der kryptographische Schlüssel K kann dann beispielsweise für eine mittels MACsec, IPsec oder TLS-PSK geschützte Kommunikation eingesetzt werden. In einer anderen Variante erfolgt eine Netzzugangskontrolle beispielsweise mittels IEE802.1x Port based Acces Control. Dabei wird das Gerät 1 identifiziert bzw. authentisiert. Der Authentisierungsserver 6 teilt dem Zugangsknoten 5 mit, ob ein angeschlossenes Gerät 1 zugelassen ist. Dazu kann z.B. ein RADIUS-Protokoll oder ein DIAMETER-Protokoll verwendet werden. Zusätzlich kann zusätzlich dem Zugangsknoten 5 eine Policy mitgeteilt werden, beispielsweise mit welchem VLAN das Gerät 1 verbunden wird, beispielsweise einem Gast-VLAN, einem Produktions-VLAN oder einem Registrierungs-VLAN. Wenn ein einzubindendes Gerät 1 in der Liste der zugelassenen Geräte enthalten ist wird es mit dem Registrierungs-VLAN verbunden. Ein bereits registriertes Gerät 1 wird dagegen mit einem Produktions-VLAN verbunden. Bei einer möglichen Ausführungsform konfiguriert der Server 6 das an dem Zugangsknoten 5 des Netzwerkes 2 angeschlossene Gerät 1, indem der Server 6 Konfigurationseinstellungen, die kryptographische Schlüssel, Zertifikate und/oder Passwörter aufweisen, mittels DHCP, UPNP, TFTP, HTTP oder SNMP über das Netzwerk 2 und dessen Zugangsknoten 5 an das angeschlossene Gerät 1 überträgt.

Der Server 6 hat Zugriff auf den Konfigurationsdatenspeicher 7, wie in Figur 1 dargestellt. Bei einer möglichen Ausführungsform befindet sich der Konfigurationsdatenspeicher 7 in einem Fileserver des Netzwerkes 2. Weiterhin ist es möglich, dass sich der Konfigurationsdatenspeicher 7 in einem Verzeichnisdienst des Netzwerkes 2 oder in einer Datenbank befindet.

Bei dem in Figur 1 dargestellten Automatisierungsnetzwerk 2 handelt es sich beispielsweise um ein Ethernet, um ein IP-Netzwerk oder um ein drahtloses Netzwerk, insbesondere WLAN, Bluetooth, 802.15.4 oder ein ZigBee Netzwerk.

Bei dem erfindungsgemäßen Verfahren erfolgt somit in einer ersten Phase eine Geräteregistrierung, beispielsweise mittels des Lesegerätes 8, das sich in einer Gerätesicherheitsschleuse 9 befindet. In einer zweiten Phase, nämlich der Gerätenetzwerkverbindung bzw. -installation erfolgt anschließend ein automatisches Konfigurieren des angeschlossenen Gerätes 1 für das Netzwerk 2, nachdem das einzubindende Gerät 1 an den Zugangsknoten 5 des Netzwerkes 2 angeschlossen ist. Die erste Phase, nämlich die Geräteregistrierung, und die zweite Phase, nämlich die Gerätenetzwerkverbindung bzw. -installation, können zeitlich getrennt ausgeführt werden. Beispielsweise werden Geräte 1 an der Gerätesicherheitsschleuse 9 zunächst registriert und in die Liste der zugelassenen Geräte in dem Konfigurationsdatenspeicher 7 eingeschrieben. Anschließend wird das registrierte Gerät 1 beispielsweise in einem Lager des Unternehmens gelagert und erst zu einem späteren Zeitpunkt an einen Zugangsknoten 5 des Automatisierungsnetzwerkes 2 zur Konfiguration angeschlossen.

Bei dem Gerät 1 kann es sich um unterschiedliche Geräte handeln, insbesondere um kommunikationsfähige Automatisierungsgeräte für ein Automatisierungsnetzwerk. Weiterhin kann es sich bei dem Netzwerk 2 um ein Netzwerk eines Fahrzeuges, beispielsweise eines Kraftfahrzeugs oder eines Schienenfahrzeuges handeln, an das ein Gerät 1 angebunden werden soll. Ferner kann es sich bei dem Netzwerk 2 beispielsweise um ein Netzwerk 2 eines Energieversorgungsunternehmens handeln, an das ein Intelligentes-Energie-Gateway als Gerät 1 angeschlossen werden soll.

## Patentansprüche

1. Verfahren zum Einbinden eines Gerätes in ein Netzwerk mit den folgenden Schritten:
(a) Erfassen (S1) einer ersten Geräte-Identifizierung (G-ID₁) des Gerätes (1) durch ein Lesegerät (8), welches dazu autorisiert ist, die erfasste erste Geräte-Identifizierung (G-ID₁) als Konfigurationsdaten in einen zugriffsgeschützten Konfigurationsdatenspeicher (7) des Netzwerkes (2) zu übermitteln, wobei die erste Geräte-Identifizierung (G-ID₁) des Gerätes (1) von dem Lesegerät (8) zu dem Konfigurationsdatenspeicher (7) des Netzwerkes (2) übermittelt und darin gespeichert wird;
(b) Anschließen des einzubindenden Gerätes (1) an einen Zugangsknoten (5) des Netzwerkes (2),
wobei sich das Gerät (1) gegenüber einem Server (6) des Netzwerkes (1) mittels einer zweiten Geräteidentifizierung (G-ID₂) identifiziert; und
(c) Automatisches Konfigurieren des angeschlossenen Gerätes (1) für das Netzwerk (2) durch den Server (6), sofern zu der zweiten Geräte-Identifizierung (G-ID₂) des an dem Zugangsknoten (5) des Netzwerkes (1) angeschlossenen Gerätes (1) bereits eine zugehörige erste Geräte-Identifizierung (G-ID₁) des Gerätes (1) in dem zugriffsgeschützten Konfigurationsdatenspeicher (7) des Netzwerkes (1) gespeichert ist;
wobei das automatische Konfigurieren des angeschlossenen Gerätes (1) durch den Server (6) kryptographisch geschützt ausgeführt wird, und wobei die zweite Geräte-Identifizierung (G-ID₂) ein digitales Zertifikat ist, das die erste Geräte-Identifizierung (G-ID₁) enthält.

2. Verfahren nach Anspruch 1,
wobei die erste Geräte-Identifizierung (G-ID₁) einen an dem Gerät (1) angebrachten optisch erkennbaren Barcode, ein optisch erfassbares Typenschild oder Etikett des Gerätes (1) oder
eine auslesbare RFID-Kennung des Gerätes (1) aufweist.

3. Verfahren nach einem der Ansprüche 1 oder 2,
wobei das Gerät (1) über eine drahtlose oder drahtgebundene Kommunikationsschnittstelle an den Zugangsknoten (5) des Netzwerkes (2) angeschlossen wird.

4. Verfahren nach einem der Ansprüche 1-3,
wobei die zweite Geräte-Identifizierung (G-ID₂) eine Herstelleridentifizierung, eine Seriennummer oder eine MAC-Adresse des Gerätes (1) aufweist.

5. Verfahren nach einem der Ansprüche 1-4,
wobei das einzubindende Gerät (1) seine zweite Geräteidentifizierung (G-ID₂) gegenüber dem Server (6) des Netzwerks (2) mittels des digitalen Zertifikates authentisiert.

6. Verfahren nach einem der Ansprüche 1-5,
wobei die erfasste erste Geräte-Identifizierung (G-ID₁) mit einem Zeitstempel versehen wird und nach Ablauf einer einstellbaren Zeitdauer automatisch aus dem Konfigurationsdatenspeicher (7) des Netzwerkes (2) gelöscht wird.

7. Verfahren nach einem der Ansprüche 1-6,
wobei die zweite Geräte-Identifizierung (G-ID₂) des an dem Netzwerk (2) angeschlossenen Gerätes (1) durch den Server (6) des Netzwerkes (2) dahingehend überprüft wird, ob sich eine zu der zweiten Geräteidentifizierung (G-ID₂) zugehörige erste Geräte-Identifizierung (G-ID₁) bereits in dem zugriffsgeschützten Konfigurationsdatenspeicher (7) des Netzwerkes (2) befindet.

8. Verfahren nach einem der Ansprüche 1-7,
wobei die erste Geräte-Identifizierung (G-ID₁) und die zweite Geräte-Identifizierung (G-ID₂) identisch sind.

9. Verfahren nach einem der Ansprüche 1-8,
wobei die erste Geräte-Identifizierung (G-ID₁) und der Hash-Wert der zweiten Geräte-Identifizierung (G-ID₂) identisch sind oder
wobei der Hash-Wert der erste Geräte-Identifizierung (G-ID₁) und die zweite Geräte-Identifizierung (G-ID₂) identisch sind.

10. Verfahren nach einem der Ansprüche 5-7,
wobei die erste Geräte-Identifizierung (G-ID₁) und der Hash-Wert des zur Authentisierung der zweiten Geräteidentifizierung (G-ID₂) gegenüber dem Server (6) des Netzwerks (2) verwendeten kryptographischen Schlüssels bzw. des verwendeten digitalen Zertifikates identisch sind.

11. Verfahren nach einem der Ansprüche 1-10,
wobei sich das an dem Zugangsknoten (5) des Netzwerkes (2) angeschlossene Gerät (1) gegenüber dem Server (6) des Netzwerkes (2) identifiziert und authentisiert.

12. Verfahren nach einem der Ansprüche 1-11,
wobei die erste Geräte-Identifizierung (G-ID₁) eine kryptographische Prüfsumme aufweist, welche durch das Lesegerät (8) verifiziert wird, bevor die erste Geräte-Identifizierung (G-ID₁) in dem Konfigurationsdatenspeicher (7) des Netzwerkes (2) durch das Lesegerät (8) gespeichert wird.

13. Server (6) zum Einbinden eines Gerätes (1) in ein Netzwerk (2), wobei der Server (6) Zugriff auf einen Konfigurationsdatenspeicher (7) des Netzwerkes (2) hat, in welchem erste Geräte-Identifizierungen (G-ID₁) von zugelassenen Geräten durch ein dazu autorisiertes Lesegerät (8) speicherbar sind,
wobei der Server (6) nach Anschluss eines Gerätes (1) an einen Zugangsknoten (5) des Netzwerkes (2) dieses Gerät (1) automatisch konfiguriert, falls zu einer von dem Gerät (1) über das Netzwerk (2) an den Server (6) übertragenen zweiten Geräte-Identifikation (G-ID₂) des Gerätes (1) eine zugehörige erste Geräte-Identifikation (G-ID₁) des Gerätes (1) bereits in dem Konfigurationsdatenspeicher (7) des Netzwerkes (2) gespeichert ist;
wobei das automatische Konfigurieren des angeschlossenen Gerätes (1) durch den Server (6) kryptographisch geschützt ausgeführt wird, und
wobei die zweite Geräte-Identifizierung (G-ID₂) ein digitales Zertifikat ist, das die erste Geräte-Identifizierung (G-ID₁) enthält.

14. Server nach Anspruch 13,
wobei der Server (6) das an dem Zugangsknoten (5) des Netzwerkes (2) angeschlossene Gerät (1) konfiguriert, indem der Server (6) Konfigurationseinstellungen, die kryptographische Schlüssel, Zertifikate und/oder Passwörter aufweisen, mittels DHCP, UPnP, TFTP, HTTP oder SNMP über das Netzwerk (2) und dessen Zugangsknoten (5) an das angeschlossene Gerät (1) überträgt.

15. Server nach Anspruch 14,
wobei der Konfigurationsdatenspeicher (7), auf den der Server (6) Zugriff hat, in einem Fileserver des Netzwerkes (2) oder in einem Verzeichnisdienst des Netzwerks (2) oder in einer Datenbank vorgesehen ist.

16. Server nach Ansprüchen 13-15,
wobei das Netzwerk (2) ein Automatisierungsnetzwerk ist,
wobei das Netzwerk (2) ein drahtgebundenes oder ein drahtloses Netzwerk ist.

## Claims

1. Method for integrating a device into a network having the steps:
(a) detection (S1) of a first device identification (G-ID₁) of the device (1) by a reading device (8), which is authorised to transmit the detected first device identification (G-ID₁) as configuration data to an access-protected configuration data memory (7) of the network (2), wherein the first device identification (G-ID₁) of the device (1) is transmitted from the reading device (8) to the configuration data memory (7) of the network and being stored therein;
(b) connection of the device (1) to be integrated to an access node (5) of the network (2),
wherein the device (1) is identified to a server (6) of the network (1) by means of a second device identification (G-ID₂); and
(c) automatic configuration of the connected device (1) for the network (2) by the server (6), if an associated first device identification (G-ID₁) of the device (1) is already stored in the access-protected configuration data memory (7) of the network (1) for the second device identification (G-ID₂) of the device (1) connected to the access node (5) of the network (1),
wherein the automatic configuration of the connected device (1) is executed in a cryptographically secured manner by the server (6) and
wherein the second device identification (G-ID₂) is a digital certificate, which contains the first device identification (G-ID₁).

2. Method according to claim 1,
wherein the first device identification (G-ID₁) comprises an optically identifiable barcode affixed to the device (1),
an optically detectable type plate or label of the device (1) or
a readable RFID identifier of the device (1).

3. Method according to one of claims 1 or 2,
wherein the device (1) is connected by way of a wireless or wired communication interface to the access node (5) of the network (2).

4. Method according to one of claims 1 to 3,
wherein the second device identification (G-ID₂) comprises a manufacturer's identification, a serial number or a MAC address of the device (1).

5. Method according to one of claims 1 to 4,
wherein the device (1) to be integrated authenticates its second device identification (G-ID₂) to the server (6) of the network (2) by means of the digital certificate.

6. Method according to one of claims 1 to 5,
wherein the detected first device identification (G-ID₁) is provided with a time stamp and deleted automatically from the configuration data memory (7) of the network (2) after the end of a settable time period.

7. Method according to one of claims 1 to 6,
wherein the second device identification (G-ID₂) of the device (1) connected to the network (2) is checked by the server (6) of the network (2) to determine whether a first device identification (G-ID₁) associated with the second device identification (G-ID₂) is already present in the access-protected configuration data memory (7) of the network (2).

8. Method according to one of claims 1 to 7,
wherein the first device identification (G-ID₁) and the second device identification (G-ID₂) are identical.

9. Method according to one of claims 1 to 8,
wherein the first device identification (G-ID₁) and the hash value of the second device identification (G-ID₂) are identical or
wherein the hash value of the first device identification (G-ID₁) and the second device identification (G-ID₂) are identical.

10. Method according to one of claims 5 to 7,
wherein the first device identification (G-ID₁) and the hash value of the cryptographic key or digital certificate used to authenticate the second device identification (G-ID₂) to the server (6) of the network (2) are identical.

11. Method according to one of claims 1 to 10,
wherein the device (1) connected to the access node (5) of the network (2) identifies and authenticates itself to the server (6) of the network (2).

12. Method according to one of claims 1 to 11,
wherein the first device identification (G-ID₁) comprises a cryptographic checksum, which is verified by the reading device (8), before the first device identification (G-ID₁) is stored by the reading device (8) in the configuration data memory (7) of the network (2).

13. Server (6) for integrating a device (1) into a network (2), wherein the server (6) has access to a configuration data memory (7) of the network (2), in which first device identifications (G-ID₁) of permitted devices can be stored by a reading device (8) authorised to do so,
wherein, after connection of a device (1) to an access node (5) of the network (2), the server (6) automatically configures said device (1) if an associated first device identification (G-ID₁) of the device (1) is already stored in the configuration data memory (7) of the network (2) for a second device identification (G-ID₂) of the device (1) transmitted by way of the network (2) to the server (6); wherein the automatic configuration of the connected device (1) is executed in a cryptographically secured manner by the server (6) and
wherein the second device identification (G-ID₂) is a digital certificate, which contains the first device identification (G-ID₁).

14. Server according to claim 13,
wherein the server (6) configures the device (1) connected to the access node (5) of the network (2) in that the server (6) transmits configuration settings, which comprise cryptographic keys, certificates and/or passwords, by means of DHCP, UPnP, TFTP, HTTP or SNMP by way of the network (2) and its access node (5) to the connected device (1).

15. Server according to claim 14,
wherein the configuration data memory (7), to which the server (6) has access, is provided in a file server of the network (2) or in a directory service of the network (2) or in a database.

16. Server according to claims 13 to 15,
wherein the network (2) is an automation network,
wherein the network (2) is a wired or wireless network.

## Revendications

1. Procédé d'intégration d'un appareil dans un réseau, comprenant les étapes suivantes :
a) saisie (S1) d'une première identification d'appareil (G-ID₁) de l'appareil (1) par un appareil de lecture (8) qui est autorisé à transférer la première identification d'appareil (G-ID₁) saisie en tant que données de configuration dans une mémoire de données de configuration (7) à accès protégé du réseau (2), la première identification d'appareil (G-ID₁) de l'appareil (1) étant transmise de l'appareil de lecture (8) à la mémoire de données de configuration (7) du réseau (2) et y étant mémorisée ;
b) connexion de l'appareil (1) à intégrer à un noeud d'accès (5) du réseau (2),
l'appareil (1) s'identifiant vis-à-vis d'un serveur (6) du réseau (1) au moyen d'une seconde identification d'appareil (G-ID₂) ; et
c) configuration automatique de l'appareil (1) connecté pour le réseau (2) par le serveur (6), dès lors qu'une première identification d'appareil (G-ID₁) de l'appareil (1) associée à la seconde identification d'appareil (G-ID₂) de l'appareil (1) connecté au noeud d'accès (5) du réseau (1) est déjà mémorisée dans la mémoire de données de configuration (7) à accès protégé du réseau (1) ;
la configuration automatique de l'appareil (1) connecté étant exécutée par le serveur (6) dans des conditions de protection cryptographique et
la seconde identification d'appareil (G-ID₂) étant un certificat numérique qui contient la première identification d'appareil (G-ID₁).

2. Procédé selon la revendication 1,
la première identification d'appareil (G-ID₁) comprenant un code à barres pouvant faire l'objet d'une reconnaissance optique apposé sur l'appareil (1), une plaque signalétique ou une étiquette de l'appareil (1) pouvant faire l'objet d'une détection optique ou une identification RFID de l'appareil (1) pouvant être lue.

3. Procédé selon l'une des revendications 1 ou 2,
l'appareil étant connecté au noeud d'accès (5) du réseau (2) par le biais d'une interface de communication sans fil ou câblée.

4. Procédé selon l'une des revendications 1-3,
la seconde identification d'appareil (G-ID₂) comprenant une identification de fabricant, un numéro de série ou une adresse MAC de l'appareil (1).

5. Procédé selon l'une des revendications 1-4,
l'appareil (1) à intégrer authentifiant sa seconde identification d'appareil (G-ID₂) vis-à-vis du serveur (6) du réseau (2) au moyen d'un certificat numérique.

6. Procédé selon l'une des revendications 1-5,
la première identification d'appareil (G-ID₁) saisie comportant une estampille temporelle et étant automatiquement effacée de la mémoire de données de configuration (7) du réseau (2) à l'expiration d'une durée pouvant être réglée.

7. Procédé selon l'une des revendications 1-6,
la seconde identification d'appareil (G-ID₂) de l'appareil (1) connecté au réseau (2) étant vérifiée par le serveur (6) du réseau (2) pour voir si une première identification d'appareil (G-ID₁) associée à la seconde identification d'appareil (G-ID₂) se trouve déjà dans la mémoire de données de configuration (7) à accès protégé du réseau (2).

8. Procédé selon l'une des revendications 1-7,
la première identification d'appareil (G-ID₁) et la seconde identification d'appareil (G-ID₂) étant identiques.

9. Procédé selon l'une des revendications 1-8,
la première identification d'appareil (G-ID₁) et la valeur de hachage de la seconde identification d'appareil (G-ID₂) étant identiques ou
la valeur de hachage de la première identification d'appareil (G-ID₁) et la seconde identification d'appareil (G-ID₂) étant identiques.

10. Procédé selon l'une des revendications 5-7,
la première identification d'appareil (G-ID₁) et la valeur de hachage de la clé cryptographique utilisée pour authentifier la seconde identification d'appareil (G-ID₂) vis-à-vis du serveur (6) du réseau (2) resp. du certificat numérique utilisé étant identiques.

11. Procédé selon l'une des revendications 1-10,
l'appareil (1) connecté au noeudd'accès (5) du réseau (2) s'identifiant et s'authentifiant vis-à-vis du serveur (6) du réseau (2).

12. Procédé selon l'une des revendications 1-11,
la première identification d'appareil (G-ID₁) comprenant une somme de contrôle cryptographique qui est vérifiée par l'appareil de lecture (8) avant que la première identification d'appareil (G-ID₁) soit mémorisée dans la mémoire de données de configuration (7) du réseau (2) par l'appareil de lecture (8).

13. Serveur (6) d'intégration d'un appareil (1) dans un réseau (2),
le serveur (6) ayant accès à une mémoire de données de configuration (7) du réseau (2) dans laquelle un appareil de lecture (8) y étant autorisé peut mémoriser les premières identifications d'appareil (G-ID₁) d'appareils autorisés,
le serveur (6), après connexion d'un appareil (1) à un noeud d'accès (5) du réseau (2), configurant automatiquement cet appareil (1) dans le cas où une première identification d'appareil (G-ID₁) de l'appareil (1) associée à une seconde identification d'appareil (G-ID₂) de l'appareil (1) transmise de l'appareil (1) au serveur (6) par le biais du réseau (2) est déjà mémorisée dans la mémoire de données de configuration (7) du réseau (2) ;
la configuration automatique de l'appareil (1) connecté étant exécutée par le serveur (6) dans des conditions de protection cryptographique, et
la seconde identification d'appareil (G-ID₂) étant un certificat numérique contenu dans la première identification d'appareil (G-ID₁).

14. Serveur selon la revendication 13,
le serveur (6) configurant l'appareil (1) connecté au noeud d'accès (5) du réseau (2) en transmettant à l'appareil (1) connecté, par le biais du réseau (2) et de ses noeuds d'accès (5) et grâce à DHCP, UPnP, TFTP, HTTP ou SNMP, des réglages de configuration comprenant des clés cryptographiques, des certificats et/ou des mots de passe.

15. Serveur selon la revendication 14,
la mémoire de données de configuration (7) à laquelle le serveur (6) a accès étant prévue dans un serveur de fichiers du réseau (2), dans un service d'annuaire du réseau (2) ou dans une base de données.

16. Serveur selon les revendications 13-15,
le réseau (2) étant un réseau d'automatisation, le réseau (2) étant un réseau câblé ou un réseau sans fil.
